# EUROPEAN PATENT APPLICATION

(11) **EP 1 746 534 A1**
(43) Date of publication of application: **24.01.2007**
(21) Application number: 05015911.0
(22) Date of filing: 21.07.2005
(51) Int. Cl.: G06Q 10/00

(54) **Calendar generator and calendar generating method**

(71) Applicant: Lu, Li-Chih, Pan-Chiao, Taipei (TW)
(72) Inventor: Lu, Li-Chih, Pan-Chiao, Taipei (TW)
(74) Representative: Winter, Brandl, Fürniss, Hübner Röss, Kaiser, Polte Partnerschaft Patent- und Rechtsanwaltskanzlei

(57) **Abstract**

The presentation relates to a calendar generator, comprising: a column generator to generate description of columns, which columns comprise blank space units representing fixed term and are labeled with time lags as represented, wherein width of columns corresponds to length of term as represented; a periodical activity plan generator to record starting date and period for at least one periodical activity plan in order to generate description of a plurality of date and corresponding activity; a fixed date activity plan generator to record at least one date and content of activity for at least one activity plan; said fixed date activity plan generator being able to grab date and activity information of said periodical activity plan generated by said periodical activity plan generator; an activity recording means to generate records of activity, including description and dates of past activities, according to inputs of user; and a user interface to display columns and contents of said columns according to description generated by said column generator, said periodical activity plan generator, said fixed date activity generator and said activity recording means and to allow user to add, revise and/or delete a periodical activity plan, a fixed date activity plan or an activity record.

## Description

### FIELD OF THE INVENTION

The present invention relates to device and method for generating a calendar, which generate a calendar file in a computer system and data representing periodical activity plan, fixed date activity plan and generate all kinds of activity plan information and activity records according to input data during the editing operation of the user. The calendar so generated may be displayed at the user interface, allowing user to edit and to take records.

### BACKGROUND OF THE INVENTION

Due to the rapid development of the computer technology, the computer system has become the most important tool for people to make plans and to take records for their daily life. The computer system provides flexibility too all users in planning and recording their daily life. As a result, a variety of computer software and hardware that provide calendar functions was developed and made available to the market. Among them, the personal digital aid has become standard equipment for most businessmen.

In the conventional calendar generating software or hardware, an extendable calendar file is generated based on a stored calendar. The calendar file may be displayed in the screen of a personal computer or a personal digital aid through the management of a computer program, such that the user may read, edit or input records. Depending on the design, the computerized calendar may be displayed in a plurality of column, each column representing a day, a week or else and is labeled with a date or a time.

The user may fill into the blank columns activity plans, which include description of future activities. The user may also fill into the columns description of activities that have been realized, as records. The records may relate to a single activity or to a particular activity plan. In addition, most computerized calendar generator provides user with function of accepting inputs of periodical activity plans. In other words, when the user fills in description and initial date or hour of one periodical activity plan, the calendar generator conducts automatic inference and generates dates of the periodical activity plan. Description of the activity is filled into columns representing the generated dates and displayed in the user interface. These conventional calendar generators are widely accepted by the consumer.

In the conventional calendar generating device and method, the calendar is displayed on the screen in a manner following the features of the computer system. In other words, the columns of the calendar are designed with flexible width. When the calendar is shown on the screen, it is difficult for the user to identify the period, frequency and generality of the activity plan. When the user is checking with the computerized calendar, great imagination is needed for the user to realize the period, frequency and generality of the activity plan, in order to determine whether the activity plan is proper.

In addition, in the conventional art, the periodical activity information is generated by inference. The periodical activity information comprises description to a plurality of periodical activity. When the user cancels a particular activity or changes the activity plan of a particular day or hour, the calendar generator would consider such changes are revisions to the inference rules. As a result, changing one single activity plan will cause changes to all inferred and determined activity plans. On the other hand, if after the inference the resulted dates are considered fixed dates, the user will have to change the individual dates of a periodical activity plan one by one, if all the dates need to be changed.

### OBJECTIVES OF THE INVENTION

The objective of this invention is to provide a method and device for the generation of a calendar in the computer system.

Another objective of this invention is to provide an automatic calendar generator and method, to generate calendar in the screen of the computer system in a manner that users are easy to determine the period, frequency and generality of an activity plan.

Another objective of this invention is to provide a method and device for the generation of a calendar in which users may easily revise any activity plan or any periodical activity plan.

### SUMMARY OF THE INVENTION

According to the present invention, a calendar generator and method are provided. The calendar generator of this invention comprises: a column generator to generate description of columns, which columns comprise blank space units representing fixed term and are labeled with time lags as represented, wherein width of columns corresponds to length of term as represented; a periodical activity plan generator to record starting date and period for at least one periodical activity plan in order to generate description of a plurality of date and corresponding activity; a fixed date activity plan generator to record at least one date and content of activity for at least one activity plan; said fixed date activity plan generator being able to grab date and activity information of said periodical activity plan generated by said periodical activity plan generator; an activity recording means to generate records of activity, including description and dates of past activities, according to inputs of user; and a user interface to display columns and contents of said columns according to description generated by said column generator, said periodical activity plan generator, said fixed date activity generator and said activity recording means and to allow user to add, revise and/or delete a periodical activity plan, a fixed date activity plan or an activity record.

These and other objectives and advantages of this invention may be clearly understood from the detailed description by referring to the drawings.

### BRIEF DESCRIPTION OF THE DRAWINGS

Fig. 1 illustrates a calendar generated by the calendar generator of this invention.
Fig. 2 shows the systematic diagram of the calendar generator of this invention.
Fig. 3 shows the flowchart of the calendar generating method of this invention.

### DETAILED DESCRIPTION OF THE INVENTION

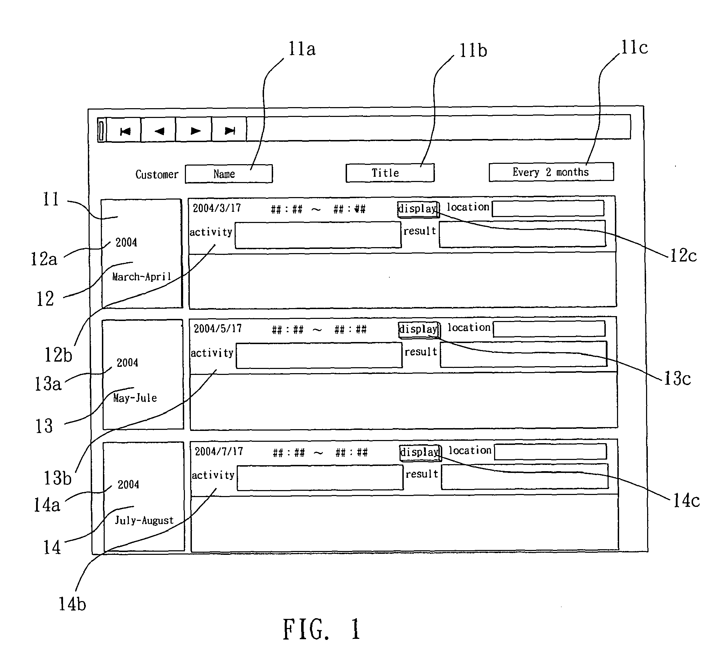

Now refer to Fig. 1. Fig. 1 illustrates a calendar generated by the calendar generator of this ivneinton. As shown in this figure, the calendar comprises a column 10 divided into a plurality of sections, with a title section 11 showing name of customer 11a, title of activity 11b being "customer care plan" and frequency of contact 11c. The calendar as shown represents a plan and a record of contacting customers in order to express sense of care. In the title section 11, name of customer 11 a, title 11b and frequency 11c is generated automatically from the memory but the value of the frequency 11c may be revised by the user.

The calendar also includes three activity columns 12, 13 and 14. Each activity column may represent a fixed term, such as two months, or a term as flexibly determined. According to the embodiment of this invention, the same width is given to columns that represent the same period of time. As a result, the user may feel it easily to determine the term of a column according to its width. The user may also determine easily whether the frequency of an activity plan or activity record, as are shown in the columns, is proper or not. If necessary, sub-columns may be added into the column.

The activity columns may further include labeling sections 12a, 13a and 14a to identify terms being represented, activity description sections 12b, 13b and 14b to show activity plans and activity records and display control sections 12c, 13c and 14c to allow the user to control the display of the activity columns. In general, the activity plan information and the activity record information shown in the activity columns 12, 13 and 14 may be distinguished by different color, font, graphic or otherwise. The user may insert, delete or revise any description of activity in the activity columns 12, 13 and 14. After such edition, the calendar generator of this invention records the edition and conducts necessary processing. The control sections 12c, 13c and 14c allows scrolling of activity description section 12b, 13b and 14b, when information to be displayed in these sections exceeds a certain quantity.

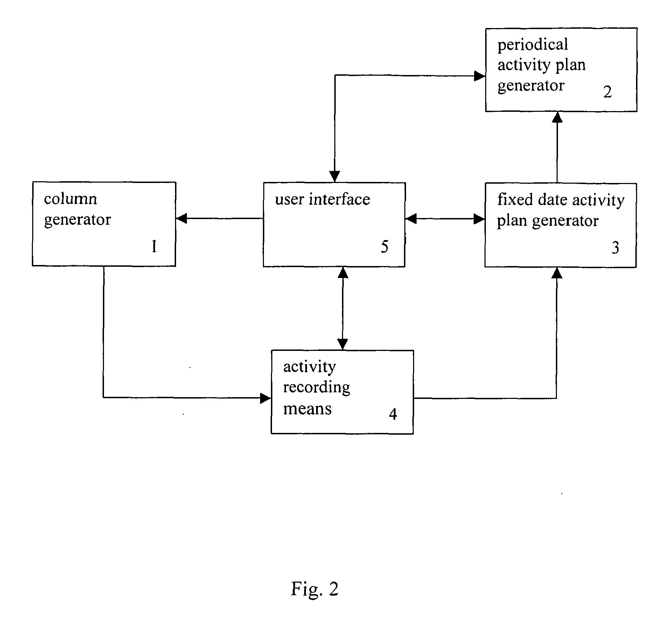

Fig. 2 shows the systematic diagram of the calendar generator of this invention. As shown in this figure, the calendar generator of this invention comprises: a column generator 1 to generate description of columns, which columns comprise blank space units representing fixed terms and are labeled with time lags as represented, wherein width of columns corresponds to length of term as represented; a periodical activity plan generator 2 to record starting date and period for at least one periodical activity plan in order to generate description of a plurality of date and corresponding activity; a fixed date activity plan generator 3 to record at least one date and content of activity for at least one activity plan; said fixed date activity plan generator 3 being able to grab date and activity information of said periodical activity plan generated by said periodical activity plan generator 2; an activity recording means 4 to generate records of activity, including description and dates of past activities, according to inputs of user; and a user interface 5 to display columns and contents of said columns according to description generated by said column generator 1, said periodical activity plan generator 2, said fixed date activity generator 3 and said activity recording means 4 and to allow user to add, revise and/or delete a periodical activity plan, a fixed date activity plan or an activity record.

To use the calendar generator of this invention to generate a calendar, the user needs to input title, customer name, period of activity and initial date and other necessary description of activity in the user interface 5. The column generator 1 then generates a table to include title, customer name(s), frequencies of activity and columns with fixed width to include description of activities. The table so generated may have the format as shown in Fig. 1. In addition, the periodical activity plan generator 2 will generate description of periodical activity plans according to the input of the user. Also according to the input of the user, the fixed date activity plan generator 3 generates corresponding date(s) and description of activity plan. All these generated information is displayed in the calendar. The generation of the calendar is thus finished.

When the user edits the content of the calendar, changes may include the followings:
Periodical activity plan: The user may request edition of a periodical activity plan by inputting a request into the activity frequency columns 11c, 12c or 13c of the user interface 5. When a legal user inputs a new activity frequency and its initial date (hour), a revision of periodical activity plan is accepted and the periodical activity plan generator 2 records such revision and generates description of a periodical activity plan. The fixed date activity plan generator 3 is activated to convert such revision into description of fixed date activity plan(s) and display such activity plan in the calendar 10. At the same time, a periodical activity plan having the same description is deleted the part following said initial date.
   In other embodiments of this invention, when the user changes a periodical activity plan or the period of the periodical activity plan, the calendar generator does not delete all the corresponding fixed date activity plans. It rather reserves the right to delete to the user's determination. Of course, it is possible to design in a manner where all the corresponding fixed date activity plans are deleted whenever a periodical activity plan is changed.
Fixed date activity plan: The user is allowed to edit content of any fixed date activity plan in the user interface 5. A legal user is allowed to insert date and description of a fixed date activity plan (adding), delete an existing activity plan (delete) and change an existing activity plan in any activity description column. When an edition is completed, the fixed date activity plan generator 3 records such change and displays the change in the calendar 10.
   In the present invention, the fixed date activity plan generator 3 is able to grab data representing date(s) and description of periodical activity plans and converts them into data representing data(s) and description of fixed date activity plans. As a result, when an item of a periodical activity plan is changed by the user, the rest part of the periodical activity plan is not changed.
Records of activity: When an planed activity is done, the user inputs a record of such activity into the calendar 10. When a new record is input, the activity recording means 4 records such information and displays the information in the calendar 10. In general, the activity record is editable. In other words, the user may be allowed to delete or revise a record of activity. In the application, when any activity is done, the user may input a "done" information to let the particular planed activity disengaged with the periodical activity plan it belongs.

In other embodiments of this invention, the activity recording means 4 is able to grab data representing description of activity generated by the fixed date activity plan generator 3 to generate certain useful inferences. For example, when the user inputs a record of activity in relating to a particular periodical activity plan, the corresponding planed activity may be made "deactivated". If a particular planed activity is not labeled as "deactivated", it is deemed "activated", whereby, when no record of activity is input in relating to an "activated" planed activity after the planed date or time, an alert is generated to remind the user to act according to the plan.

The information of the description of the calendar may be stored in the memory device of any computer equipment. As such step is well known to those skilled in the art, detailed description thereof is thus omitted.

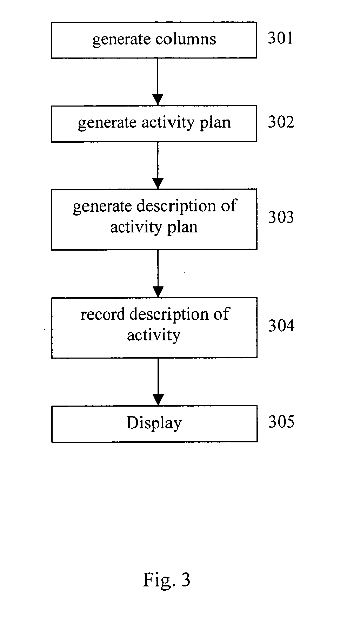

Fig. 3 shows the flowchart of the calendar generation method of this invention. As shown in this figure, to generate a calendar in the computer equipment, the steps include:
At 301, a table including a plurality of columns representing fixed terms and labeled with time lags is generated according to description of columns, wherein width of columns correspond to length of time period as represented.
At 302 a plurality of date and corresponding description of activity is generated according to description of at least one periodical activity plan.
At 303 at least one date and description of its corresponding activity is generated according to description of at least one fixed date activity plan.
At 304 description of record of activity is generated according to at least one record of activity.
At 305 the generated table is displayed in the screen of a computer equipment and description of such activity plans and records of activity is displayed by inserting such description in the table.

The generation of a useful calendar is thus completed. In the calendar, the descriptive columns need not to represent identical terms but the user may easily determine the length of time period they represent. The frequency of the activities may also be easily identified. When a periodical activity plan is input, details of the activity plan are displayed in the calendar. The user may thus add, delete or change any planed activity in the user interface according to actual needs. Such edition does not affect the input activity plan itself, unless the user otherwise edits. In addition, the present invention provides a useful tool to manage the execution of the planed activities. The user is allowed to review all past plans and activities in the calendar.

As the present invention has been shown and described with reference to preferred embodiments thereof, those skilled in the art will recognize that the above and other changes may be made therein without departing form the spirit and scope of the invention.

## Claims

1. A calendar generator to generate a calendar in a computer equipment, comprising:
a column generator to generate description of columns, which columns comprise blank space units representing fixed term and are labeled with time lags as represented;
a periodical activity plan generator to record starting date and period for at least one periodical activity plan in order to generate description of a plurality of date and corresponding activity;
a fixed date activity plan generator to record at least one date and content of activity for at least one activity plan;
an activity recording means to generate records of activity, including description and dates of past activities, according to inputs of user; and
a user interface to display columns and contents of said columns according to description generated by said column generator, said periodical activity plan generator, said fixed date activity generator and said activity recording means and to allow user to add, revise and/or delete a periodical activity plan, a fixed date activity plan or an activity record.

2. The calendar generator according to claim 1, wherein width of said columns corresponds to length of time period as represented.

3. The calendar generator according to claim 1, wherein said fixed date activity plan generator is able to grab date and activity information of said periodical activity plan generated by said periodical activity plan generator.

4. The calendar generator according to claim 1, wherein when one record of activity relating to a periodical activity plan is input; planed activity corresponding to said record is deactivated, whereby an alert is generated if no record of activity regarding a planed activity not being deactivated is input before the planed date or time.

5. Method for generating and displaying a calendar in a computer equipment, comprising the steps of:
generating a table including a plurality of columns representing fixed terms and labeled with time lags according to description of columns stored in said computer equipment;
generating a plurality of date and corresponding description of activity according to input description of at least one periodical activity plan;
generating at least one date and description of its corresponding activity according to input description of at least one fixed date activity plan;
generating description of record of activity according to at least one input record of activity; and
displaying said generated table and inserting description of said activity plans and said records of activity in said table.

6. The method for generating and displaying a calendar in a computer equipment according to claim 1, wherein width of columns correspond to length of time period as represented.
